# EUROPÄISCHE PATENTSCHRIFT

(11) **EP 1 283 182 B1**
(45) Veröffentlichungstag und Bekanntmachung des Hinweises auf die Patenterteilung: **22.12.2004**
(21) Anmeldenummer: 02017868.7
(22) Anmeldetag: 08.08.2002
(51) Int. Cl.: B65G 43/02

(54) **Einrichtung zum Überwachen des (Gerad- bzw. Schief-) Laufs des Fördergurtes eines Gurtbecherwerkes**
Control system for the (straight or oblique) running of a transport belt of a bucket elevator
Système de contrôle pour le mouvement (rectiligne ou oblique) d'une bande de transport d'un élévateur à godets

(30) Priorität: 08.08.2001 DE 20113181 U
(43) Veröffentlichungstag der Anmeldung: 12.02.2003
(73) Patentinhaber: Beumer Maschinenfabrik GmbH & Co. KG, 59269 Beckum (DE)
(72) Erfinder: Lauhoff, Hans Dipl.-Ing., 59269 Beckum (DE); Rewer, Martin Dipl.-Ing.(FH), 59302 Oelde (DE)
(74) Vertreter: Hoormann, Walter, Dr.-Ing.

(56) Entgegenhaltungen:
- EP-A- 0 989 079
- DE-U- 20 113 181
- US-A- 5 614 063

## Beschreibung

Die vorliegende Erfindung betrifft eine Einrichtung zum Überwachen des (Gerad- bzw. Schief-)Laufs des Fördergurtes eines Gurtbecherwerkes, mit mehreren induktiven Initiatoren, die bei einem quer zur (Gurt-)Laufrichtung erfolgenden, seitlichen Auswandern (sog. Schieflauf) des zu überwachenden Fördergurtes um einen vorgegebenen unteren (ersten) Grenzwert ein Warn- und/oder Betätigungssignal erzeugen, oder/und - ggf. (erst) bei Erreichen eines oberen zweiten Grenzwertes - mittels wenigstens eines Betätigungselementes einer Betätigungseinrichtung einen Eingriff in den normalen Betriebsverlauf des Gurtbecherwerkes (wie bspw. ein Abschalten des Vordergurtantriebes) bewirken, wobei dem Fördergurt (vorzugsweise am oberen oder/und unteren Endabschnitt des Becherwerkes) seitlich zum Fördergurt an wenigstens einer Überwachungsstelle ein Paar einander gegenüberliegender Initiatoren zugeordnet ist, mittels dessen ein eventueller Schieflauf des Fördergurtes zu erfassen ist; wobei weiterhin den Initiatoren eine Einrichtung (wie z.B. eine Anzeige- und/oder Betätigungseinrichtung) zugeordnet ist, mittels welcher ggf. ein festgestellter Schieflauf des Fördergurtes quantitativ anzuzeigen und/oder wenigstens eine Gegenmaßnahme (ggf. selbsttätig) einzuleiten sowie (ggf. vollständig) durchzuführen ist; und wobei die jeweils einer Überwachungsstelle zugeordneten beiden Initiatoren mit einem Differenzbildner verbunden sind, welcher die absoluten Meßwerte der beiden zusammenwirkenden Initiatoren eines/jedes Initiatorenpaares voneinander subtrahiert, und das dabei erhaltene Meßwert-Differenzsignal einer Anzeigeeinrichtung und/oder einer Steuereinrichtung (bzw. ggf. deren Rechner) zuleitet.

Eine solche Einrichtung ist aus der EP 0 989 079 bekannt, und hat sich technisch an sich auch bestens bewährt, jedoch unter Kostengesichtspunkten dennoch nicht verbreitet durchsetzen können, obwohl der Gurtüberwachung bei einem Gurtbecherwerk eine sehr große Bedeutung zukommt, weil die bspw. in Zementwerken eingesetzten Gurte schon aufgrund der dort herrschenden hohen Umgebungstemperatur bei Heißgutförderung, und der regelmäßig geforderten Lebensdauer von ca. 80.000 Betriebsstunden spezielle, aufwendige Gummimischungen und Gurtkonstruktionen erfordern, und entsprechend aufwendig sind, weil die bekannte Einrichtung insb. aufgrund der aufwendigen Eisenkerne der (i.a. wenigstens vier) zum Einsatz kommenden Initiatoren entsprechend hohe Investitionskosten erfordert.

Zu der Schieflaufproblematik sei zunächst noch allgemein angemerkt, daß ihr Hauptproblem darin liegt, daß der Fördergurt bei übermäßigem Schieflauf mit seiner entsprechenden Kante mit ortsfesten Bauteilen in Berührung kommen, und dabei (ggf. erheblich, unter Umständen bis zum Einriß) beschädigt werden kann. Während der Fördergurt eines Gurtförderers bei Schieflauf bspw. an die Gestelle der Tragrollenstationen anlaufen kann, kann er bei einem Gurtbecherwerk mit dem Schachtgehäuse oder sonstigen festen Bauteilen in Berührung kommen, und dabei ggf. seitlich aufgeschlitzt werden, wobei ggf. auch die Tragkonstruktion des Gurtbecherwerkes Schaden nehmen kann.

Genauso verheerend können die Auswirkungen eines übermäßigen Gurtschieflaufs sein, wenn ein Fördergurt unter Last seitlich ganz oder teilweise von den ihn führenden und zugleich abstützenden Trommeln abläuft, und dabei das geförderte Schüttgut unkontrolliert abgeworfen wird.

Um einem Gurtschieflauf entgegenzuwirken, hat man bereits seit vielen Jahren die den Fördergurt umlenkenden (Antriebs- bzw. Spann-)Trommeln an ihrer mit dem Gurt in Berührung stehenden Mantelfläche nicht zylindrisch, sondern ballig bzw. spiegelsymmetrisch zur in Längsrichtung verlaufenden, vertikalen Mittelebene doppelt konisch ausgestaltet. Durch eine solche Ausgestaltung der Trommeln werden im mittleren Bereich des Fördergurtes höhere Spannungen erzeugt als an seinen Längsrändern, so daß es bei einem seitlichen Auswandern des Gurtes (Schieflauf) aufgrund der asymmetrischen Spannungsverteilung zu einer zentrierenden Kraftkomponente kommt, welche den Fördergurt tendenziell wieder zur Mitte führt.

Obwohl sich eine ballige oder im wesentlichen ähnliche Ausgestaltung der Umlenktrommeln an sich bestens bewährt hat, wurde jedoch festgestellt, daß bei einer solchen Ausbildung der Verschleiß der Umlenktrommeln erheblich ist, da es beim Umlauf eines Fördergurtes um eine Trommel auf dem Berührungsbogen zumindest teilweise zu einem Schlupf zwischen der Gurtinnenseite und dem Trommelmantel kommt. Dabei hat sich weiterhin gezeigt, daß dieser Verschleiß in Trommellängsrichtung nicht im wesentlichen gleichmäßig ist. Vielmehr wird aufgrund des Verschleißes die Balligkeit im Verlaufe des Betriebes abgetragen, so daß sie-und damit die Führungswirkung der balligen Umlenktrommeln - entsprechend abnimmt, und nach einer bestimmten Betriebszeit praktisch völlig verlorengeht. Dieser Zeitraum beträgt häufig immerhin etwa zwei Jahre, in anderen Fällen aber auch nur etwa drei bis vier Monate.

Letzteres kann bspw. bei Gurtbecherwerken der Fall sein, die zum Vertikaltransport von Zementklinker in einem Zementwerk eingesetzt werden, da es sich bei Zementklinker um ein sehr aggressives Fördergut handelt, welches in Schlupfbereichen auf den Trommelmantel eine schmirgelnde Wirkung ausübt.

In derartigen Fällen kann es dann also nach einer gewissen Betriebszeit zum Anlauf des Fördergurtes an den Becherwerksschlot kommen, wobei spätestens dann (zweckmäßigerweise ersichtlich bereits vorher) die erforderlichen Reparaturmaßnahmen an den Trommeln durchzuführen sind, um deren zentrierende Wirkung wieder herzustellen, weil es anderenfalls - wie ausgeführt - zu geradezu verheerenden Auswirkungen kommen kann, unter Umständen sogar letztlich zu einem Gurtriß mit anschließendem Absturz des die Becher haltenden Fördergurtes. Wenn man dabei bedenkt, daß die Förderhöhe von Gurtbecherwerken zwischenzeitlich bereits 100 m weit überschritten hat, kann man sich ohne weiteres vorstellen, welche Schäden dabei nicht nur durch Beschädigung der Becherwerksschlote, sondern auch durch die sonstigen erforderlichen Reparaturmaßnahmen und nicht zuletzt den hiermit verbundenen Betriebsausfall entstehen können, da mit dem Stillstand eines in einer Produktionslinie für die Zementherstellung integrierten Becherwerkes die gesamte Produktionslinie regelmäßig stillgesetzt werden muß.

Ein Gurtschieflauf stellt sich jedoch nicht nur unter den vorstehend beschriebenen Umständen ein, sondern bspw. auch dann, wenn sich das Fördergut im Becherwerksfuß im Verlaufe der Zeit aufbaut und so verfestigt, daß die regelmäßig bei Gurtbecherwerken im Becherwerksfuß angeordnete (i.a. gewichtsbelastete) Spannstation während des Betriebes angehoben wird. Hierdurch wird die Spanntrommel im Becherwerksfuß entlastet, so daß keine den Gurt zentrierenden Spannungen mehr erzeugt werden können, und es daher ebenfalls zu einem Gurtschieflaufkommen kann.

Eine ähnliche Situation liegt dann vor, wenn der Becherwerksfuß durch Fördergurtrückfall überschüttet wird. Auch in derartigen Fällen schwimmt die Spanntrommel gleichsam auf, so daß sich keine ausreichende zentrierende Gurtspannung einstellen kann.

Auch defekte Becherwerkslager können zu einem Gurtschieflauf führen, und zwar bspw. dann, wenn die dabei auftretende Achsverlagerung stärkere Auswirkungen hat als die vorhandene Balligkeit bzw. Konizität der Trommel(n).

Hierzu sei angemerkt, daß die Balligkeit, also der Radiusunterschied zwischen Mitte Trommel und Außenrand der Trommel, bei einer Gurtbreite von bspw. 2 m i.a. maximal nur ca. 5 mm beträgt. Dabei liegt also ein Durchmesserunterschied zwischen der Trommelmitte und dem Trommel-Außenrand an einer Trommel-Stirnseite von maximal ca. nur 10 mm vor.

Um die vorstehend angesprochenen Auswirkungen eines erheblichen Gurtschieflaufs zu vermeiden, hat die Anmelderin/Patentinhaberin zunächst sogenannte Gurtschieflaufschalter mit zwei Schaltpunkten eingesetzt. Ein solcher Gurtschieflaufschalter wird über einen Schaltnokken, der ins Becherwerksgehäuse hineinragt, abhängig von der vorher eingestellten diskreten Gurtlage geschaltet. Eine solche Anordnung/Einrichtung hat indes den Nachteil, daß der (die) Schaltnocken ins Becherwerksgehäuse hineinragt (hineinragen), so daß die Gefahr besteht, daß er (sie) bei verhältnismäßig starkem Schieflauf den Fördergurt bzw. an diesem befestigte Becher beschädigt (verformt) oder selbst abgeschert wird.

Die Anmelderin/Patentinhaberin glaubte seinerzeit bei Schaffung des Gegenstandes gem. der oben bereits erwähnten EP 0 989 079 sämtliche der vorgenannten Nachteile bzw. Mängel überwunden zu haben, ist dann aber - wie bereits erwähnt - an einem verbreiteten Einsatz der aus dieser Druckschrift bekannten Einrichtung aufgrund der vorgegebenen Kostensituation gescheitert.

Der vorliegenden Erfindung liegt daher die Aufgabe zugrunde, die vorbekannte Einrichtung zur Durchführung des aus der EP 0 989 079 bekannten Verfahrens möglichst unter Aufrechterhaltung sämtlicher damit verbundener Vorteile insb. bezüglich deren Initiatoren so zu verbessern, daß die Einrichtung auch unter den wirtschaftlichen Gesichtspunkten der erforderlichen Investionskosten akzeptabel ist.

Die Lösung dieser Aufgabe erfolgt durch das Kennzeichen des Anspruches 1. Bevorzugte Ausgestaltungen der vorliegenden Erfindung sind in Unteransprüchen beschrieben.

Bevor die Erfindung weiter erläutert wird, sei zu dem vorbekannten Stand der Technik noch auf folgendes verwiesen:

Ein Überwachungsverfahren, bei dem das zu überwachende Zugmittel an wenigstens einer seitlich zum Zugmittel gelegenen Überwachungsstelle mittels eines Initiators überwacht wird, mittels dessen ein eventueller Schieflauf des Zugmittels im wesentlichen kontinuierlich zu erfassen ist, wobei dem Initiator eine Einrichtung zugeordnet ist, mittels welcher ein festgestellter Schieflauf des Zugmittels quantitativ anzuzeigen und/oder wenigstens eine Gegenmaßnahme einzuleiten ist, war seinerzeit bereits durch die SU 1 740 282 A1 bekannt. Dabei werden die Signale der eingesetzten vier Detektoren in einer Schaltung summiert und verglichen, um ein Steuersignal für den Gurt-Ausrichtemechanismus zu erzeugen. Auch bei jener vorbekannten Einrichtung wurden konventionelle induktive Detektoren mit den vorstehend beschriebenen (kostenmäßigen) Nachteile verwendet.

Entsprechendes gilt im Ergebnis auch für die in der US-PS 4 959 040 offenbarte Überwachungseinrichtung (siehe dort z.B. Fig. 3), oder die Bandlauf-Regeleinrichtung nach der EP 0 387 242, bei welcher außer optischen Sensoren ggf. auch induktive Sensoren vorgesehen sein können, wobei diese Annäherungsdetektoren ebenfalls konventioneller Bauart sind.

Zum technologischen Hintergrund sei der Vollständigkeit halber noch auf die DE 11 65 398 B, die DE 23 48 549 A, sowie die WO 9626139 A verwiesen.

Demgegenüber sind zur Lösung der obigen Aufgabe für die erfindungsgemäße Einrichtung Initiatoren vorgesehen, die als (induktive) Flächen-Analoggeber ausgebildet sind, welche man zur Abgrenzung bzw. Unterscheidung zu konventionellen induktiven Initiatoren mit Eisenkern auch als "Luftspulen" bezeichnen könnte.

Die erfindungsgemäß zum Einsatz kommenden Initiatoren weisen jeweils einen elektrischen Schwingkreis auf, dessen Spule von einem Hochfrequenz-Oszillator gespeist wird, und ein Ausgangssignal erzeugt, welches der Auswerteinrichtung der Gurtlauf-Überwachungseinrichtung über eine (Ausgangs-)Signalleitung zugeleitet wird.

Die Initiatoren weisen bevorzugt eine Sensor-Meßplatte od.dgl. auf, welche in eine metallfreie Zone eingebettet ist, wobei bevorzugt die (sich parallel zur Sensor-Festplatte erstreckende) Breite und Tiefe der metallfreien Zone jeweils um wenigstens ca. 20 % größer ist als das entsprechende jeweilige Meßplattenmaß. So beträgt bei einer Meßplattenbreite und -tiefe von jeweils ca. 200 mm die Breite oder Tiefe der metallfreien Zone jeweils wenigstens ca. 250 mm, vorzugsweise deutlich mehr (z.B. 400 mm).

Die Höhe der metallfreien Zone kann etwa so groß wie die Breite und/oder Tiefe der Sensor-Meßplatte sein, nämlich bei einer Breite bzw. Tiefe der Sensor-Meßplatte von ca. 200 mm, ca. 150 mm (vorzugsweise wenigstens 200 mm und mehr) betragen.

Die Initiatoren sind bevorzugt jeweils in einer Öffnung der Wandung des Becherwerk-Schachtes auf einer aus Kunststoff bestehenden Verschlußplatte montiert, und zwar höchst bevorzugt so, daß im Ruhezustand (ohne Schieflage des Fördergurtes) zwischen jedem als Flächen-Analoggeber ausgebildetem Initiator und der metallischen Wandung ein vorgegebener (Erfassungs-)Abstand vorhanden ist, bei dem die Initiatoren noch deutliche, auswertbare Signale erzeugen, wobei dieser Abstand bei durch Schieflauf des Fördergurtes erzeugter Gurt-Schieflage dann auf der einen Seite zu- und auf der anderen Seite abnimmt.

Die Auswerteinrichtung ist bevorzugt so ausgebildet, daß sie jeweils bei einem Vorbeilauf eines Bechers die Signale bei kleinstem Abstand auswertet, also des Abstandes der entsprechenden Becherkante zum jeweiligen Initiator. Dabei ist die Auswerteinrichtung zweckmäßigerweise so ausgebildet, daß sie vorhersehbare Störsignale, wie sie ggf. von vom Fördergurt abstehenden Metallteilen wie insb. einer metallischen Gurt-Klemmverbindung erzeugt werden, erkennt und eliminiert bzw. bei der Signalauswertung unterdrückt.

Jeder Überwachungsstelle ist bevorzugt in an sich bekannter Weise als Anzeigeeinrichtung eine zu einer LED-Lichtleiste zusammengefaßte Anzahl von Leuchtdioden zugeordnet, wobei die einzelnen LED-Elemente der Lichtleiste bevorzugt unterschiedlichen Abständen bzw. Abstandsbereichen zwischen dem jeweiligen Initiator und dem Fördergurt zugeordnet sind. Dabei ist die Einrichtung höchst bevorzugt so ausgebildet, daß ein inneres bzw. mittleres LED-Element einer Lichtleiste bei seiner Aktivierung einen ordnungsgemäßen mittigen Lauf des Fördergurtes anzeigt, und daß (die) benachbarte(n) LED-Element(e) einem seitlichen vorgegebenen Auswanderungszustand zugeordnet ist (sind), und zur optischen Abgabe eines Vorwarnsignals gegenüber den innersten LED-Elementen vorzugsweise mit einer anderen, ggf. von innen nach außen an Farb- und/oder Leuchtintensität zunehmenden Farbgebung versehen ist (sind). Weiterhin ist die Einrichtung bevorzugt so ausgebildet, daß dem letzten Vorwarn-LED-Element wenigstens ein Element zur optischen Abgabe eines Alarmsignals nachgeordnet ist, dessen Farbgebung und/oder Farbintensität und/oder Leuchtstärke bevorzugt unterschiedlich zu den vorhergehenden LED-Elementen ist, wobei dem/den alarmgebenden Element(en) ein Element zur optischen Abgabe eines die Abschaltung der Anlage anzeigenden Signals nachgeordnet sein kann, dessen Farbgebung bzw. -intensität besonders auffallend ist.

Weitere Ausgestaltungen der vorliegenden Erfindung sind nachstehend an Ausführungsbeispielen unter Bezugnahme auf eine Zeichnung erläutert und beschrieben. Es zeigt:
- **Fig. 1**: eine etwas schematisierte Seitenansicht auf ein Gurtbecherwerk in Richtung des Pfeiles I in Fig. 2 gesehen;
- **Fig. 2**: eine stirnseitige Seitenansicht auf das Gurtbecherwerk gem. Fig. 1 in Richtung des Pfeils II in Fig. 1 gesehen;
- **Fig. 3**: eine Draufsicht auf eine konkrete Auswerteinrichtung einer Überwachungsstelle in Richtung des Pfeiles III in Fig. 4 gesehen;
- **Fig. 4**: die Auswerteinrichtung gem. Fig. 3 in Richtung des Pfeiles IV in Fig. 3 gesehen;
- **Fig. 5**: die Auswerteinrichtung gem. den Fig. 3 und 4 in einer perspektivischen Darstellung schräg von oben gesehen;
- **Fig. 6**: ein Beispiel einer Anschlußleiste;
- **Fig. 7**: eine beispielhafte graphische Darstellung der Ausgangsspannungen zweier Initiatoren eines Initiatorpaares an den Eingängen als Funktion der Abstände zwischen den Becherwerk-Seitenwänden und den Becherwänden am Beispiel eines seitlichen Abstandes von 140 mm jeweils zwischen Initiator und Becherwand (oberer Teil von Fig. 7), dargestellt über dem Verlauf des eingeprägten Ausgangsstroms als Funktion des Schieflaufs, wobei zugleich der jeweilige Anzeigebereich der als Signalgeber fungierenden Leuchtdioden eingezeichnet ist (Fig. 7 unten);
- **Fig. 8**: eine Fig. 7 entsprechende Darstellung für einen seitlichen Abstand von 120 mm zwischen Initiator und Becherwand;
- **Fig. 9**: eine Draufsicht auf einem induktiven Flächen-Analoggeber mit eingezeichneter metallfreier Zone;
- **Fig. 10**: eine gegenüber Fig. 9 verkleinerte perspektivische Darstellung eines Gebers gem. Fig. 9;
- **Fig. 11**: den Verlauf der Ausgangsspannung eines Gebers gem. den Fig. 9 und 10 in Abhängigkeit zu seiner Entfernung zum signalauslösenden (Metall-) Gegenstand bei zwei unterschiedlichen Gebern;
- **Fig. 12**: eine schematische Darstellung der Geberanordnung einschließlich der metallfreien Zone;
- **Fig. 13**: eine Variante eines als "Luftspule" ausgebildeten Initiators für eine erfindungsgemäße Gurt-Überwachungseinrichtung eines Gurtbecherwerkes;
- **Fig. 14**: einen Schnitt durch die Geberanordnung gem. Fig. 13 in Richtung der Schnittlinie XIV-XIV gesehen; und
- **Fig. 15**: die in Fig. 14 mit einem Kreis umrandete Einzelheit XV-XV in vergrößerter Darstellung, aus welcher die "Luftspule" des Gebers gem. den Fig. 13 und 14 sowie die metallfreie Zone erkennbar sind.

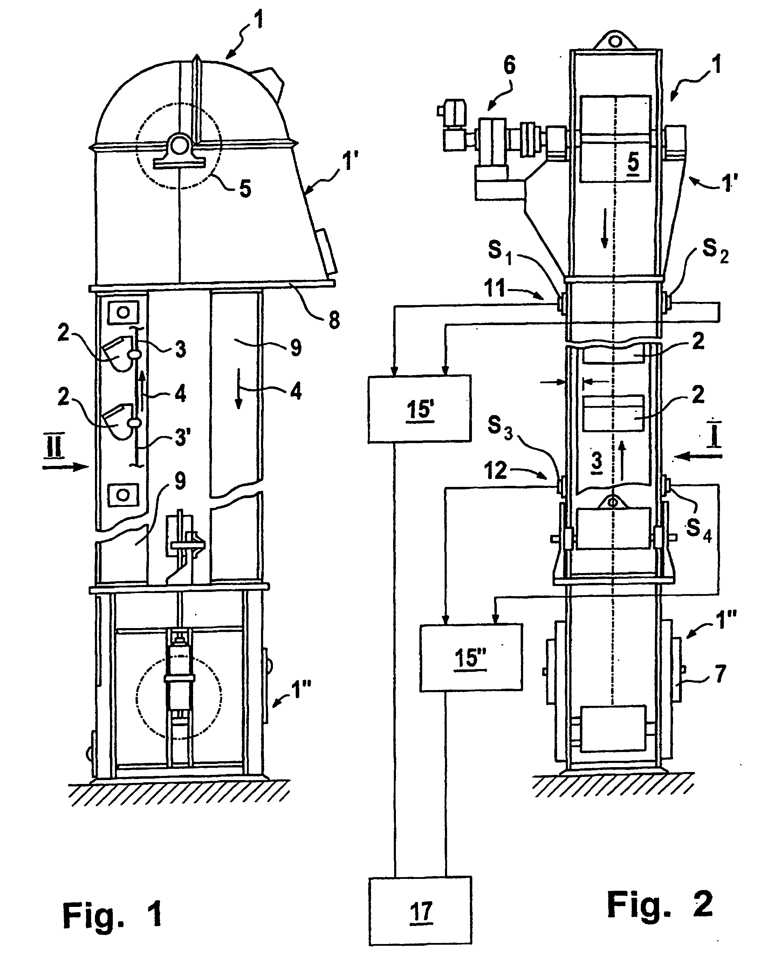

Die Fig. 1 und 2 zeigen ein im ganzen mit 1 bezeichnetes Gurtbecherwerk, dessen mit Bechern 2 bestückter Fördergurt 3 in Richtung der Pfeile 4 um eine im Becherwerkskopf 1' angeordnete, von einem Antrieb 6 angetriebene Antriebstrommel 5 sowie um eine im Becherwerksfuß 1" angeordnete Spanntrommel 7 umläuft. Dabei wirken also beide Trommeln 5, 7 als Umlenktrommeln für den Fördergurt 3, dessen Becher 2 beim Einfahren in den Becherwerksfuß 1" aus dem sogenannten Becherwerkssumpf Schüttgut aufnehmen, welches dem Becherwerksfuß 1" (auf im einzelnen nicht dargestellte Weise) kontinuierlich zugeführt wird, um das mit dem aufsteigenden Trum 3' geförderte Schüttgut letztlich am Becherwerksauswurf auswerfen.

Der mit den Bechern 2 versehene Fördergurt 3 verläuft vollständig in einem gekapselten Gehäuse, welches durch den Becherwerkskopf 1', den Becherwerksfuß 1", sowie zwei parallel zueinander verlaufende, vertikale Becherwerksschlote 9, 9 gebildet wird, die in den Fig. 1 und 2 zum Teil fortgelassen worden sind, um das Innere des Becherwerkes 1 deutlicher zeigen zu können.

Beide Trommeln 5, 7 sind leicht ballig ausgebildet, um möglichst stets einen Geradlauf des Fördergurtes 3 (innerhalb bestimmter Schieflaufgrenzen) zu gewährleisten. Da dieses gem. den einleitenden Ausführungen dennoch keineswegs gesichert ist, zumal es sich bei dem vorliegenden Ausführungsbeispiel um ein Becherwerk eines Zementwerkes handelt, welches recht aggressiven Zementklinker fördert, der ggf. bereits nach einigen Monaten ein Abtragen der Balligkeit aufgrund eines Schlupf-Verschleißes bewirkt, und da die Förderhöhe derartiger Becherwerke zwischenzeitlich nicht selten bis zu 100 m und mehr beträgt, so daß es sich um entsprechend aufwendige Maschinen handelt, ist das Gurtbecherwerk 1 mit einer Einrichtung zum Überwachen des Gerad- bzw. Schieflaufs des Fördergurtes 3 versehen, welche vier jeweils als Flächen-Analoggeber in der Art von "Luftspulen" ausgebildete induktive Initiatoren S₁, S₂ bzw. S₃, S₄ aufweist (siehe Fig. 2), die bei einem quer zur Laufrichtung 4 erfolgenden, seitlichen Auswandern (Schieflauf) des Fördergurtes 3 um einen vorgegebenen unteren (ersten) Grenzwert wenigstens ein Signal (Warn- und/oder Betätigungssignal) erzeugen, und bei Erreichen eines oberen zweiten Grenzwertes mittels eines Betätigungselementes einer entsprechenden Betätigungseinrichtung einen Eingriff in den normalen Betrieb des Gurtbecherwerkes 1 vornehmen, nämlich dieses sicherheitshalber abschalten, und zusätzlich ein akustisches Warnsignal auslösen.

Zu diesem Zweck ist dem Fördergurt 3 am oberen und am unteren Endabschnitt des Becherwerkes 1 jeweils an einer Überwachungsstelle 11 bzw. 12 ein Paar einander gegenüberliegender, seitlich mit Abstand zum Fördergurt 3 angeordneter, als induktive Flächen-Analoggeber ("Luftspulen") ausgebildeter Initiatoren S₁, S₂ bzw. S₃, S₄ zugeordnet, denen einerseits eine Anzeigeeinrichtung 13 und andererseits eine Betätigungseinrichtung zugeordnet ist, mittels welcher ggf. ein festgestellter Schieflauf des Fördergurtes 3 (quantitativ) anzuzeigen ist, wenn der erste Schieflauf-Grenzwert zur einen oder anderen Seite hin überschritten worden ist, und mittels welcher beim Überschreiten des zweiten Schieflauf-Grenzwertes eine geeignete Gegenmaßnahme selbsttätig einzuleiten und durchzuführen ist, nämlich das Abschalten des Antriebes 6, um weitere erforderliche Maßnahmen einleiten und durchführen zu können, ohne daß der Gurt 3 oder aber auch die übrigen Teile des Becherwerkes 1 gefährdet werden.

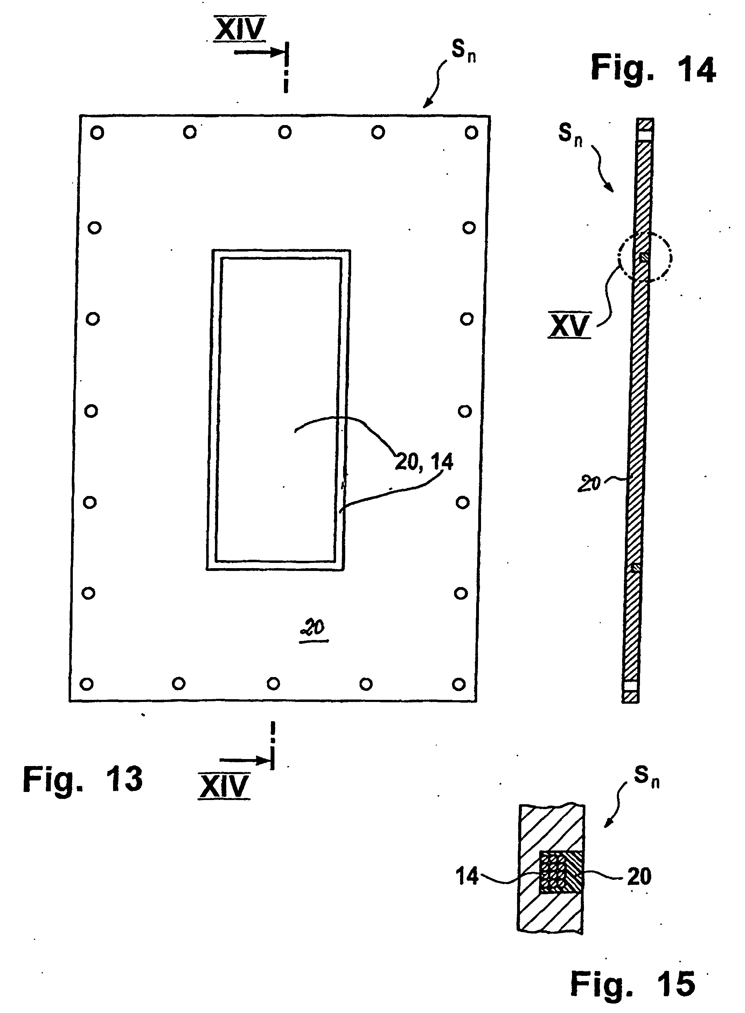

Die Initiatoren S₁, S₂ bzw. S₃, S₄ weisen jeweils eine Spule 14 auf (s. z.B. Fig. 13 und 15), die von einem nicht dargestellten Hochfrequenz-Oszillator gespeist wird, und einen Teil eines elektrischen Schwingkreises bildet, der ein Ausgangssignal erzeugt, welches einer Auswerteinrichtung 15 über eine Ausgangs-Signalleitung zuzuleiten ist.

Dabei ist noch nachzutragen, daß die Initiatoren S₁ - S₄ mit einem Differenzbildner verbunden sind, welcher jeweils die beiden absoluten Meßwerte der beiden zusammenwirkenden Initiatoren S₁, S₂ bzw. S₃, S₄ eines/jedes Initiatorenpaares voneinander subtrahiert, und das dabei erhaltene Meßwert-Differenzsignal einerseits der Anzeigeeinrichtung 14 und andererseits einer Steuereinrichtung zuleitet. Die Auswerteinrichtung für das obere Initiatorenpaar S₁, S₂ ist mit 15' bezeichnet, und die Auswerteinrichtung der beiden unteren Initiatoren S₃, S₄ mit 15".

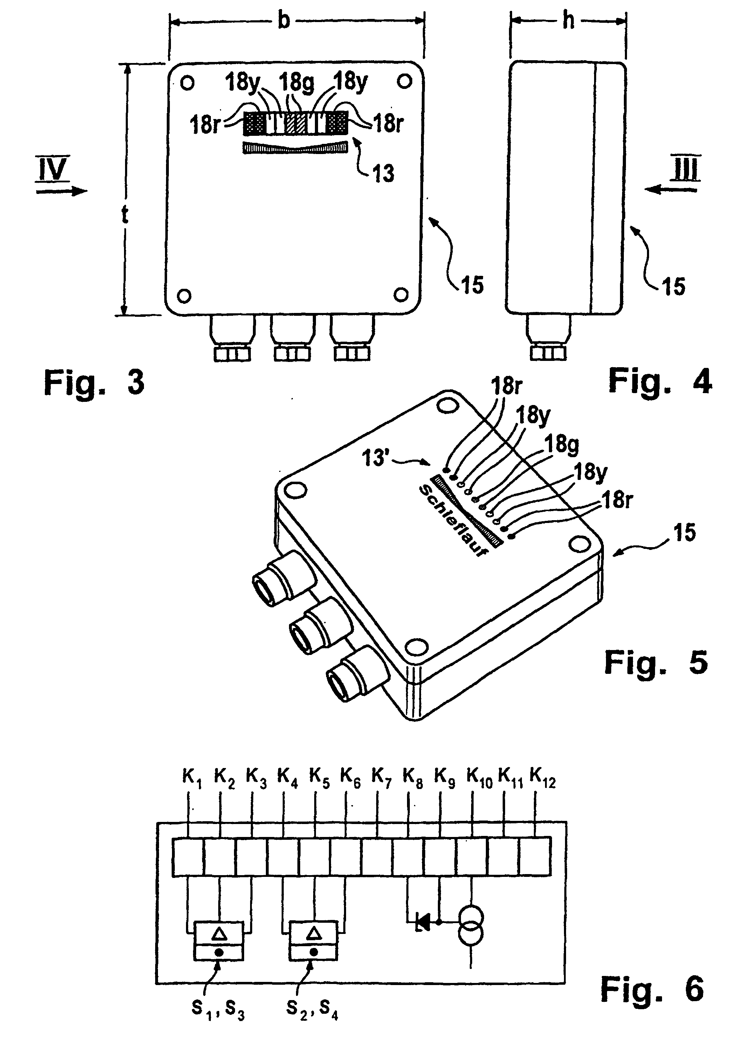

Die Fig. 3 - 5 zeigen eine konkrete Ausführungsform einer solchen Auswerteinrichtung 15 in verschiedenen Ansichten. Die Breite b und die Tiefe t betragen jeweils lediglich ca. 12 cm bei einer Höhe h von weniger als 6 cm. Es handelt sich also schon bei dem derzeitigen frühen Entwicklungsstand um eine relativ kleine, platzsparende Einheit, die an geeigneter Stelle zu montieren ist. Die optische Anzeigeeinrichtung 13 wird weiter unten noch erörtert. Es sei hier lediglich bereits erwähnt, daß die Auswerteinrichtungen 15' und 15" kontinuierlich die ihnen von den Initiatoren mitgeteilte und vom Differenzbildner gebildete Differenz der jeweils beiden Meßwerte als elektrisches Signal (4 - 20 mA) an die Steuereinrichtung 17 der Überwachungseinrichtung bzw. des Gurtbecherwerkes 1 übertragen, wobei der mittlere Wert (12 mA) des Signalbereiches bedeutet, daß kein Schieflauf vorhanden ist, während der eine Wertebereich (12 - 4 mA) einen zunehmend linksseitigen, und der andere Wertebereich (12 - 20 mA) einen zunehmend rechtsseitigen Schieflauf wiedergibt.

Dieses wird auch von der Anzeigeeinrichtung 13 wiedergegeben, die eine zu einer LED-Lichtleiste 13' zusammengefaßte Anzahl von Leuchtdioden 18 aufweist. Dabei sind jeweils die beiden äußeren Leuchtdioden 18ᵣ rot, die beiden mittleren Leuchtdioden 18_{g} grün, und die jeweils dazwischen liegenden beide Leuchtdioden 18_{y} gelb, so daß das Bedienungspersonal ggf. sogleich bereits optisch den jeweiligen Schieflaufzustand erkennen kann.

An die Klemmen K₁ - K₃ sind die linken Initiatoren S₁ uns S₃ angeschlossen, und an den Klemmen K₄ - K₆ die beiden rechten Initiatoren S₂ und S₄. Die Versorgung des Stromausgangs erfolgt an den Anschlußklemmen K8 und K9, und der Ausgang des eingeprägten Stroms (4 - 20 mA) ist mit der Anschlußklemme K10 verbunden, während die Spannungsversorgung an den Anschlußklemmen K11 und K12 erfolgt (s. Fig. 6).

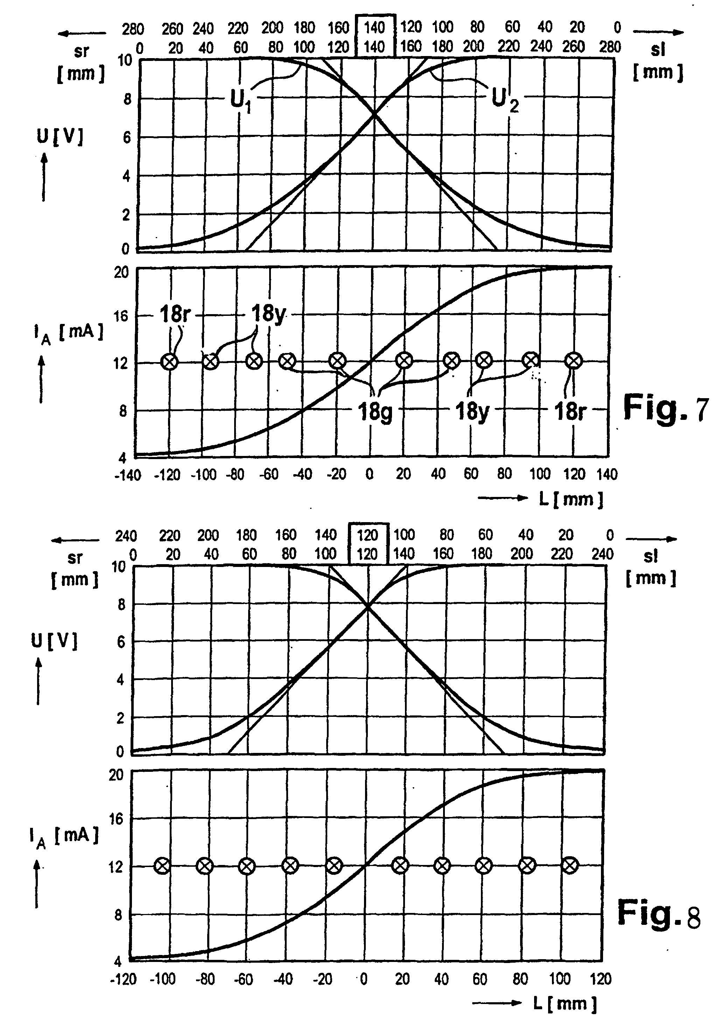

Fig. 7 zeigt an einem Ausführungsbeispiel für einen seitlichen Abstand zwischen Initiator Sₙ und Becherwand (und zwar derjenigen Wand der Becher 2, die dem betreffenden Initiator Sₙ jeweils zugekehrt ist, und beim Gurtumlauf am nächsten kommt), die Ausgangsspannungen U₁ bzw. U₂ zweier Initiatoren an den Eingängen als Funktion des jeweiligen Abstandes sᵣ bzw. s₁ zwischen den Seitenwänden und den Becherwänden in der oberen Darstellung, und in der unteren Darstellung den eingeprägten Ausgangsstrom I_{A} als Funktion des Schieflaufs L, wobei auch die Anzeigebereiche der farbigen Signalleuchten 18 eingezeichnet sind.

Fig. 8 zeigt die gleiche Darstellung mit dem Unterschied, daß der seitliche Abstand zwischen Initiator S_{N} und der Bezugsbecherwand lediglich 120 mm beträgt.

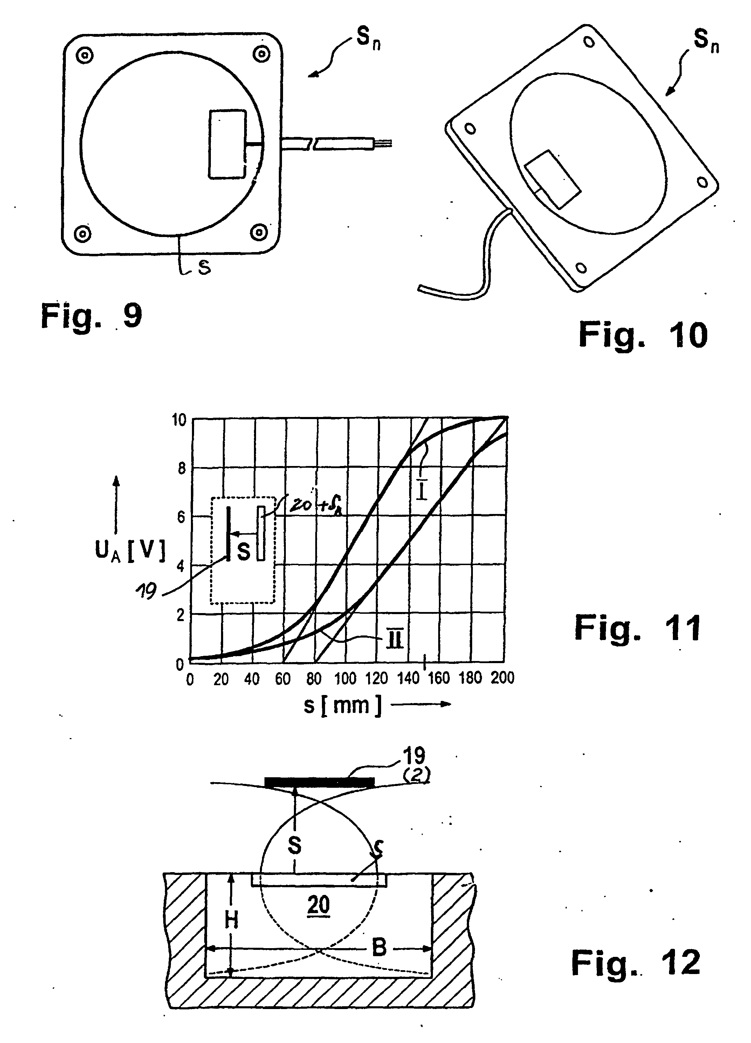

Die Fig. 9 - 15 stellen noch konkreter auf die Ausbildung der erfindungsgemäß zum Einsatz kommenden "Luftspulen" als Initiatoren S₁ - S₄ ab, die jeweils eine Sensor-Meßplatte 19 aufweisen, welche in eine metallfreie Zone 20 eingebettet sind, wobei die sich parallel zur Sensor-Meßplatte 19 erstreckende Breite B und Tiefe der metallfreien Zone 20 jeweils um wenigstens ca. 20 % größer ist als das entsprechende Maß der Sensor-Meßplatte 19. Bei einer Meßplattenbreite und -tiefe von jeweils ca. 200 mm ist die Breite B und die Tiefe der metallfreien Zone 20 jeweils wenigstens ca. 250 mm, vorzugsweise deutliche mehr, nämlich z.B. 400 mm. Die Höhe H der metallfreien Zone 20 kann etwa so groß wie die Breite B und/oder Tiefe der Sensor-Meßplatte 19 sein, nämlich bei einer Breite bzw. Tiefe der Sensor-Meßplatte 19 von ca. 200 mm wenigstens ca. 150 mm betragen, vorzugsweise 200 mm oder mehr.

Fig. 11 zeigt wiederum beispielhaft die Abhängigkeit der Ausgangsspannung U_{A} als Funktion der Entfernung s bei unterschiedlichen Ausgestaltungen, nämlich einer Meßplatte mit den Abmaßen 200 x 200 mm (I) bzw. den Abmessungen 400 x 400 mm (II), wobei die Entfernungskonstante S im erstgenannten Falle 1 50 mm und im zweiten Falle 200 mm beträgt.

Schließlich zeigt Fig. 12 eine schematische Darstellung eines in einer metallfreien Zone 20 montierten Sensors 19, und die Fig. 13 - 15 an einem anderen Ausführungsbeispiel noch einmal deutlich(er) die Ausbildung und Anordnung der Spule 14 eines Initiators in dessen metallfreier Zone 20.

Es bleibt noch nachzutragen, daß die Initiatoren S₁ - S₄ jeweils in einer Wandung des betreffenden Becherwerksschachtes bzw. -schlotes 9 zweckmäßigerweise auf einer aus Kunsstoff bestehenden Verschlußplatte montiert werden, und zwar so, daß im Ruhezustand (d.h. also ohne Schieflage des Fördergurtes 3) zwischen jedem Initiator S_{N} und der metallischen Wandung ein vorgegebener Erfassungsabstand vorhanden ist, bei dem die Initiatoren S₁ - S₄ deutliche, auswertbare Signale erzeugen, wobei dieser Abstand bei durch Schieflauf erzeugter Schieflage mithin auf der einen Seite zu- und auf der anderen Seite abnimmt, so daß an der optischen Auswerteinrichtung 15 auch ohne weiteres deutlich zu erkennen ist, zu welcher Seite hin der Fördergurt 3 ausgewandert ist. Dabei ist die Verschlußplatte bevorzugt separat ausgebildet. Das ist schon unter Verschleißgesichtspunkten, aber auch für die Montage vorteilhaft. Außerdem bleibt das Becherwerk dabei geschlossen, und es ergibt sich ein zusätzlicher Luftspalt, was für die thermische Belastung sehr vorteilhaft ist.

Dabei sind die Auswerteinrichtungen 15', 15" so ausgebildet, daß sie jeweils bei einem Vorbeilauf eines Bechers 2 an einem Initiator Sₙ die Signale kleinsten Abstandes auswerten, also des Abstandes der Becherkante zum jeweiligen Initiator S_{N}, wobei die Auswerteinrichtungen 15', 15" zugleich so ausgebildet sind, daß sie vorhandene vorhersehbare Störsignale, wie sie bspw. durch eine Gurt-Klemmverbindung metallischer Art erzeugt werden, erkennen und eliminieren, d.h. also bei der Signalauswertung unterdrücken.

Es sei noch nachgetragen, daß sich als Einbettmittel für die metallfreien Zonen ein Kunststoff wie bspw./insb. Polycarbonat als besonders geeignet herausgestellt hat, daß aber natürlich hierfür auch zahlreiche andere Werkstoffe (insb. Kunststoffe) in Frage kommen.

Zusammenfassend ist festzustellen, daß mit dem Erfindungsgegenstand nunmehr nach mehrjähriger intensiver Forschung endlich ein Weg aufgefunden worden ist, um das aus der EP 0 989 079 bekannte Gurt-Überwachungsverfahren verbreitet für eine Schieflauf-Überwachung von Gurtbecherwerksgurten einsetzen zu können, da die Kosten für die erfindungsgemäß vorgesehenen induktiven Flächen-Analoggeber in der Art von "Luftspulen" als Initiatoren nur einen Bruchteil konventioneller induktiver Geber mit Eisenkern kosten, und damit einen generellen Einsatz der erfindungsgemäßen Überwachungseinrichtung ermöglichen, deren technische Eignung (mit konventionellen induktiven Gebern) bereits vor Jahren nachgewiesen worden ist.

### Bezugszeichenliste

- **1**: Gurt-Becherwerk

- **2**: Becher (von 1)
- **3**: Fördergurt
- 4: Pfeile
- 5: Antriebstrommel
- **6**: Antrieb (von 5)
- **7**: Spanntrommel
- **8**: Auswurf (von 1)
- **9**: Schlote
- **10** **11**: Überwachungsstelle
- **12**: Überwachungsstelle **13** Anzeigeeinrichtung **14** Spule (von S₁ - S₄)

- 16: Differenzbildner
- 17: Steuereinrichtung
- **18**: Leuchtdioden (von 13')
- **19**: Sensor-Meßplatte
- **20**: metallfreie Zone

- B: Breite
- H: Höhe
- T: Tiefe
- S: Initiator

- **1'**: Becherwerkskopf
- **1"**: Becherwerksfuß

- **3'**: aufsteigendes Trum

- **13'**: Lichtleiste

- **15', 15'**: Auswerteinrichtung (für S₁, S₂)

## Patentansprüche

1. Einrichtung zum Überwachen des Gerad- bzw. Schief- Laufs des Fördergurtes (3) eines Gurtbecherwerkes (1), mit mehreren induktiven Initiatoren (S₁ - S₄), die bei einem quer zur (Gurt-)Laufrichtung (4) erfolgenden seitlichen Auswandern "Schieflauf" des zu überwachenden Fördergurtes (3) um einen vorgegebenen unteren ersten Grenzwert ein Warnund/oder Betätigungssignal erzeugen, oder/und - ggf. erst bei Erreichen eines oberen zweiten Grenzwertes - mittels wenigstens eines Betätigungselementes einer Betätigungseinrichtung einen Eingriff in den normalen Betriebsverlauf des Gurtbecherwerkes (1), wie bspw. ein Abschalten des Fördergurtantriebes (7), bewirken, wobei dem Fördergurt (3) vorzugsweise am oberen oder/und unteren Endabschnitt des Gurtbecherwerkes (1) an wenigstens einer Überwachungsstelle (11; 12) ein Paar einander gegenüberliegender Initiatoren (S₁, S₂; S₃, S₄) zugeordnet ist, mittels dessen ein eventueller Schieflauf des Fördergurtes (3) zu erfassen ist; wobei weiterhin den Initiatoren (z.B. S₁, S₂) eine Anzeige- und/oder Betätigungs- Einrichtung (13) zugeordnet ist, mittels welcher ggf. ein festgestellter Schieflauf des Fördergurtes (3) vorzugsweise quantitativ anzuzeigen ist, und/oder wenigstens eine Gegenmaßnahme ggf. selbsttätig einzuleiten sowie ggf. vollständig durchzuführen ist; und wobei die jeweils einer Überwachungsstelle (z.B. 11) zugeordneten Initiatoren (z.B. S₁, S₂) mit einem Differenzbildner (16) verbunden sind, welcher die absoluten Meßwerte der beiden zusammenwirkenden Initiatoren (S₁, S₂) voneinander subtrahiert, und das erhaltene Meßwert-Differenzsignal der Anzeigeeinrichtung (13) und/oder einer Steuereinrichtung (17) bzw. ggf. deren Rechner zuleitet, **dadurch gekennzeichnet, daß** die Initiatoren (S₁ - S₄) als induktive Flächen-Analoggeber "Luftspulen", ausgebildet sind.

2. Einrichtung nach Anspruch 1, **dadurch gekennzeichnet, daß** die Initiatoren (S₁ - S₄) jeweils einen elektrischen Schwingkreis aufweisen, dessen von einem Hochfrequenz-Oszillator gespeiste Spule (14) ein Ausgangssignal erzeugt, welches der Auswerteinrichtung (15) über eine Ausgangssignalleitung zuzuleiten ist.

3. Einrichtung nach Anspruch 1 oder 2, **dadurch gekennzeichnet, daß** die Initiatoren (S₁ - S₄) eine Sensor-Meßplatte (19) od.dgl. aufweisen, die in eine metallfreie Zone (20) eingebettet ist.

4. Einrichtung nach Anspruch 3, **dadurch gekennzeichnet, daß** die Fläche/das Volumen der metallfreien Zone (20) erheblich größer als die entsprechende Montage- Fläche/das entsprechende (Montage-)Volumen des ihr zugeordneten Sensors ist.

5. Einrichtung nach Anspruch 3 oder 4, **dadurch gekennzeichnet, daß** die - sich parallel zur Senor-Meßplatte (19) erstreckende - Breite (B) und Tiefe der metallfreien Zone (20) jeweils um wenigstens ca. 20 % größer ist als das entsprechende Meßplattenmaß.

6. Einrichtung nach Anspruch 5, **dadurch gekennzeichnet, daß** bei einer Meßplattenbreite und -tiefe von jeweils ca. 200 mm die Breite (B) und Tiefe der metallfreien Zone (20) jeweils wenigstens ca. 250 mm beträgt, vorzugsweise deutlich mehr, z.B. 400 mm.

7. Einrichtung nach einem oder mehreren der Ansprüche 3 - 6, **dadurch gekennzeichnet, daß** die Höhe (H) der metallfreien Zone (20) etwa so groß ist wie die Breite und/oder Tiefe der Sensor-Meßplatte (19).

8. Einrichtung nach Anspruch 7, **dadurch gekennzeichnet, daß** bei einer Breite bzw. Tiefe der Sensor-Meßplatte (19) von ca. 200 mm die Höhe (H) der metallfreien Zone (20) wenigstens ca. 150 mm beträgt, vorzugsweise 200 mm und mehr.

9. Einrichtung nach einem oder mehren der vorhergehenden Ansprüche, **dadurch gekennzeichnet, daß** die Initiatoren (S₁ - S₄) jeweils in einer Öffnung der Wandung des Becherwerkschachtes (9) auf einer Kunststoff-Verschluß- bzw. Abdeckplatte montiert sind.

10. Einrichtung nach Anspruch 9, **dadurch gekennzeichnet, daß** die Verschluß- bzw. Abdeckplatte getrennt von der Becherwerkskonstruktion, insb. einem Becherwerksschlot, ausgebildet ist.

11. Einrichtung nach einem oder mehren der vorhergehenden Ansprüche, insb. nach Anspruch 8, **dadurch gekennzeichnet, daß** die Initiatoren (S₁ - S₄) so montiert sind, daß im Ruhezustand, ohne Schieflage des Fördergurtes (3), zwischen jedem Initiator (S₁, ..., S₄) und der metallischen Wandung ein vorgegebener Erfassungs- Abstand vorhanden ist, bei dem die Initiatoren (S₁, ..., S₄) deutliche, auswertbare Signale erzeugen, wobei dieser Abstand bei durch Schieflauf des Fördergurtes (3) erzeugter Schieflage auf der einen Seite zu- und auf der anderen Seite abnimmt.

12. Einrichtung nach einem oder mehreren der vorhergehenden Ansprüche, **dadurch gekennzeichnet, daß** die Auswerteinrichtung (15) so ausgebildet ist, daß sie jeweils bei einem Vorbeilauf eines Bechers (2) die Signale kleinsten Abstandes auswertet, also des Abstandes der/einer Becherkante zum jeweiligen Initiator (S₁, ..., S₄).

13. Einrichtung nach einem oder mehreren der vorhergehenden Ansprüche, **dadurch gekennzeichnet, daß** die Auswerteinrichtung so ausgebildet ist, daß sie vorhersehbare Störsignale, wie sie ggf. von einer vom Fördergurt (3) abstehenden metallischen Gurt-Klemmverbindung erzeugt werden, erkennt und eliminiert, d.h. bei der Signalauswertung unterdrückt.

14. Einrichtung nach einem oder mehreren der vorhergehenden Ansprüche, **dadurch gekennzeichnet, daß** jeder Überwachungsstelle (11, 12) als Anzeigeeinrichtung (13) eine zu einer LED-Lichtleiste (19) zusammengefaßte Anzahl von Leuchtdioden (18) zugeordnet ist.

15. Einrichtung nach Anspruch 14, **dadurch gekennzeichnet, daß** die einzelnen LED-Elemente (18) der Lichtleiste (19) unterschiedlichen Abständen bzw. Abstandsbereichen zwischen dem jeweiligen Initiator (S) und dem Fördergurt (3) zugeordnet sind.

16. Einrichtung nach Anspruch 15, **dadurch gekennzeichnet, daß** ein inneres bzw. mittleres LED-Element (18_{g}) der Lichtleiste (19) bei seiner Aktivierung einen ordnungsgemäßen mittigen Lauf des Fördergurtes (3) anzeigt; daß das, bzw. die benachbarten LED-Element(e) (18_{y}, 18ᵣ) einem seitlichen vorgegebenen Auswanderungszustand zugeordnet ist, bzw. sind, und zur optischen Abgabe eines Vorwarnsignals gegenüber den innersten LED-Elementen (18_{g}) vorzugsweise mit einer anderen, ggf. von innen nach außen an Farb- und/oder Leuchtintensität zunehmenden Farbgebung versehen ist, bzw. sind; daß dem letzten Vorwarn-LED-Element wenigstens ein Element zur optischen Abgabe eines Alarmsignals nachgeordnet ist, dessen Farbgebung und/oder Farbintensität und/oder Leuchtstärke bevorzugt unterschiedlich vorzugsweise intensiver zu den vorhergehenden Elementen (18) ist; und daß dem, bzw. den alarmgebenden Elementen, ein Element zur optischen Abgabe eines die Abschaltung der Anlage anzeigenden Signals nachgeorndet ist, dessen Farbgebung bzw. Farbintensität besonders auffällig ist.

17. Einrichtung nach einem oder mehreren der Ansprüche 3 - 16, **dadurch gekennzeichnet, daß** das Einbettmaterial für die Sensor-Meßplatte (19) eines Initiators (S) aus einem Kunststoff, wie z.B. Polycarbonat besteht.

## Claims

1. A system for monitoring the straight or skew running of the conveyor belt (3) of a bucket elevator (1), with a plurality of inductive initiators (S₁-S₄), which, in the event of the conveyor belt (3) for monitoring migrating laterally transversely of the (belt) running direction (4)-"skewing" - , by an amount corresponding to a preset bottom first limit, generate a warning and/or actuation signal, and/or - if required only when a top second limit is reached - effect, by means of at least one actuating element of an actuating device, an intervention into the normal course of operation of the bucket elevator (1), such as, for example, disconnection of the conveyor belt drive (7), wherein the conveyor belt (3) is associated, preferably at the top and/or bottom end section of the bucket elevator (1), at one monitoring station (11; 12) at least, with a pair of oppositely situated initiators (S₁, S₂; S₃, S₄), by means of which any skewing of the conveyor belt (3) can be detected; wherein furthermore there is associated with the initiators (for example S₁, S₂) a display and/or actuation device (13) by means of which any skewing of the conveyor belt (3) detected can be displayed preferably quantitatively, and/or at least one countermeasure can be initiated if required automatically and be performed completely if required; and wherein the initiators (e.g. S₁, S₂) respectively associated with a monitoring station (e.g. 11) are connected to a subtractor (16) which subtracts from one another the absolute measurements of the two co-operating initiators (S₁, S₂), and feeds the resulting measurement difference signal to the display device (13) and/or a control device (17) or their computers as required, **characterised in that** the initiators (S₁ - S₄) are constructed as inductive surface analogue transmitters, "air coils".

2. A system according to claim 1, **characterised in that** the initiators (S₁ - S₄) each comprise an electric oscillatory circuit of which the coil (14) fed by a high-frequency oscillator generates an output signal which is fed to the evaluator device (15) via an output signal line.

3. A system according to claim 1 or 2, **characterised in that** the initiators (S₁ - S₄) have a sensor measuring plate (19) or the like embedded in a metal-free zone (20).

4. A system according to claim 3, **characterised in that** the surface/the volume of the metal-free zone (20) is considerably greater than the corresponding mounting surface/the corresponding (mounting) volume of the sensor associated therewith.

5. A system according to claim 3 or 4, **characterised in that** the width (B) - extending parallel to the centre measuring plate (19) - and depth of the metal-free zone (20) are each at least approximately 20% larger than the corresponding measuring plate dimension.

6. A system according to claim 5, **characterised in that** given a measuring plate width and depth of respectively about 200 mm the width (B) and depth of the metal-free zone (20) is respectively about 250 mm, preferably much more, e.g. 400 mm.

7. A system according to any one or more of claims 3 to 6, **characterised in that** the height (H) of the metal-free zone (20) is approximately the same size as the width and/or depth of the sensor measuring plate (19).

8. A system according to claim 7, **characterised in that** given a width and depth of the sensor measuring plate (19) of about 200 mm the height (H) of the metal-free zone (20) is at least approximately 150 mm, preferably 200 mm and more.

9. A system according to any one or more of the preceding claims, **characterised in that** the initiators (S₁ - S₄) are each mounted in an opening in the wall of the bucket elevator shaft (9) on a plastic closure or cover plate.

10. A system according to claim 9, **characterised in that** the closure or cover plate is constructed separately from the bucket elevator structure, particularly a bucket elevator stack.

11. A system according to any one or more of the preceding claims, particularly according to claim 8, **characterised in that** the initiators (S₁ - S₄) are so mounted that in the state of rest, in which there is no skewing of the conveyor belt (3), a preset detection distance is provided between each initiator (S₁, ..., S₄) and the metal wall, at which distance the initiators (S₁, ..., S₄) generate distinctive evaluatable signals, said distance increasing on one side and decreasing on the other side in the event of a skew position produced by skewing of the conveyor belt (3).

12. A system according to any one or more of the preceding claims, **characterised in that** the evaluator device (15) is so constructed that each time a bucket (2) passes it evaluates the signals of the minimum distance, i.e. the distance of the or a bucket edge from the respective initiator (S₁, ..., S₄).

13. A system according to any one or more of the preceding claims, **characterised in that** the evaluator device is so constructed that it recognises and eliminates, i.e. suppresses during the signal evaluation, the predictable interference signals such as may be produced by a metal belt clamp connection projecting from the conveyor belt (3).

14. A system according to any one or more of the preceding claims, **characterised in that** each monitoring station (11, 12) is associated with a display device (13) in the form of a number of light-emitting diodes (18) combined to form an LED array (19).

15. A system according to claim 14, **characterised in that** the individual LED elements (18) of the array (19) are associated with different distances or distance zones between the respective initiator (S) and the conveyor belt (3).

16. A system according to claim 15, **characterised in that** when activated an inner or middle LED element (18g) of the array (19) indicates proper central running of the conveyor belt (3); **in that** the neighbouring LED element or elements (18_{y}, 18ᵣ) is/are associated with a lateral predetermined migration state and for optical indication of a prewarning signal is/are provided preferably with a different coloration from the innermost LED elements (18g), if required a coloration increasing in colour and/or light intensity from the inside to the outside; **in that** the last prewarning LED element is followed by at least one element for optical indication of an alarm signal, the coloration and/or colour intensity and/or light intensity of which is preferably different from, preferably more intensive than, the preceding elements (18); and **in that** the alarm-giving element or elements is/are followed by an element for the optical indication of a signal displaying disconnection of the plant, the coloration or colour intensity of which element is particularly striking.

17. A system according to any one or more of claims 3 to 16, **characterised in that** the embedding material for the sensor measuring plate (19) of an initiator (S) consists of a plastic, for example polycarbonate.

## Revendications

1. Dispositif de surveillance du mouvement rectiligne ou oblique d'une courroie de transport (3), d'un élévateur à godet à courroie (1), comprenant plusieurs initiateurs inductifs (S₁ à S₄) qui, dans le cas d'un dévoiement latéral, un "défilement oblique", s'effectuant transversalement par rapport à la direction de défilement (de courroie) (4), de la courroie de transport (3) à surveiller, autour d'une première valeur limite inférieure prédéterminée, produisent un signal d'avertissement et/ou d'actionnement, et/ou - le cas échéant ensuite lors de l'atteinte d'une deuxième valeur limite supérieure - au moyen d'un élément d'actionnement, appartenant à un dispositif d'actionnement, provoquent une intervention dans le déroulement normal du fonctionnement de l'élévateur à godet à courroie (1), tel que par exemple une mise hors service de l'entraînement de la courroie de transport (7), sachant que, à la courroie de transport (3) est associée, de préférence sur le tronçon d'extrémité supérieur et/ou inférieur de l'élévateur à godet à courroie (1), en au moins un point de surveillance (11; 12), une paire d'initiateurs (S₁, S₂, S₃, S₄) opposés les uns aux autres, au moyen de laquelle un éventuel défilement oblique de la courroie de transport (3) peut être appréhendé ; sachant en outre qu'aux initiateurs (par exemple S₁, S₂) est associé un dispositif d'affichage et/ou d'actionnement, au moyen duquel, le cas échéant, un défilement oblique, ayant été constaté, de la courroie de transport (3) est à afficher, de préférence, quantitativement, et/ou au moins une disposition correctrice étant à induire, le cas échéant automatiquement, ainsi qu'à exécuter le cas échéant complètement ; et où les initiateurs (par exemple S₁, S₂), chacun associé à un point de surveillance (par exemple 11), sont reliés à un formateur de différence (16) qui soustrait l'une de l'autre les valeurs de mesure absolues des deux initiateurs (S₁, S₂) coopérant, et amène le signal de différence de valeurs de mesure obtenu au dispositif d'affichage (13) et/ou à un dispositif de commande (17) respectivement, le cas échéant à son ordinateur, **caractérisé en ce que** les initiateurs (S₁ à S₄) sont réalisés sous la forme de "bobines à air ou sans fer", qui sont des capteurs analogiques de surface de nature inductive.

2. Dispositif selon la revendication 1, **caractérisé en ce que** les initiateurs (S₁ à S₄) présentent chacun un circuit oscillant électrique, dont une bobine (14), alimentée par un oscillateur haute fréquence, produit un signal de sortie à fournir au dispositif d'évaluation (15) par l'intermédiaire d'une ligne de signalisation de sortie.

3. Dispositif selon la revendication 1 ou 2, **caractérisé en ce que** les initiateurs (S₁ à S₄) présentent une plaque de mesure de capteur (19) ou analogue, qui est incorporée dans une zone (20) sans métal.

4. Dispositif selon la revendication 3, **caractérisé en ce que** l'aire/le volume de la zone (20) sans métal est notablement plus grand(e) que l'aire de montage correspondant/le volume de montage correspondant du capteur lui étant associé.

5. Dispositif selon la revendication 3 ou 4, **caractérisé en ce que** la largeur (B) - s'étendant parallèlement à la plaque de mesure de capteur (19) - et la profondeur de la zone sans métal (20) sont plus grandes, chaque fois d'au moins environ 20 %, que la dimension de la plaque de mesure correspondante.

6. Dispositif selon la revendication 5, **caractérisé en ce que**, dans le cas d'une largeur et d'une profondeur de la plaque de mesure, respectivement d'environ 200 mm, la largeur (B) et la profondeur de la zone sans métal (20) sont respectivement d'au moins 250 mm, de préférence nettement supérieure, par exemple de 400 mm.

7. Dispositif selon l'une ou plusieurs des revendications 3 à 6, **caractérisé en ce que** la hauteur (H) de la zone sans métal (20) est à peu près de la valeur de la largeur et/ou de la profondeur de la plaque de mesure de capteur (19).

8. Dispositif selon la revendication 7, **caractérisé en ce que** dans le cas d'une largeur ou d'une profondeur de plaque de mesure de capteur (19) d'environ 200 mm, la hauteur (H) de la zone sans métal (20) est au moins d'environ 150 mm, de préférence de 200 mm et plus.

9. Dispositif selon l'une ou plusieurs des revendications précédentes, **caractérisé en ce que** les initiateurs (S₁ à S₄) sont chacun montés dans une ouverture de la paroi du puits d'élévateur à godet (9), sur une plaque de fermeture ou de recouvrement, en matière synthétique.

10. Dispositif selon la revendication 9, **caractérisé en ce que** la plaque de fermeture ou de recouvrement est réalisée séparément de la construction de l'élévateur à godet, en particulier d'une cheminée d'élévateurs à godet.

11. Dispositif selon l'une ou plusieurs des revendications précédentes, en particulier selon la revendication 8, **caractérisé en ce que** les initiateurs (S₁ à S₄) sont montés de manière qu'à l'état de repos, sans que la courroie de transport (3) soit en position oblique, entre chaque initiateur (S₁, ..., S₄) et la paroi métallique est prévu un intervalle de détection prédéterminé, pour lequel les initiateurs (S₁, ..., S₄) produisent des signaux exploitables, nets, sachant que cet espacement va en augmentant sur un côté et en diminuant sur l'autre côté, lorsqu'on est à une position oblique, produite par le défilement oblique de la courroie de transport (3).

12. Dispositif selon l'une ou plusieurs des revendications précédentes, **caractérisé en ce que** le dispositif d'évaluation (15) est réalisé de manière qu'il évalue chaque fois, lors d'un passage d'un godet (2), les signaux d'un espacement minimal, donc de l'espacement de l'arête /d'une arête de godet par rapport à l'initiateur (S₁, ..., S₄) respectif.

13. Dispositif selon l'une ou plusieurs des revendications précédentes, **caractérisé en ce que** le dispositif d'évaluation est réalisé de manière qu'il identifie les signaux parasites prévisibles, tel que par exemple ceux provenant d'une liaison avec serrage de la courroie métallique, en saillie de la courroie de transport (3), et les élimine, par exemple les supprime au stade de l'évaluation du signal.

14. Dispositif selon l'une ou plusieurs des revendications précédentes, **caractérisé en ce que**, à chaque point de surveillance (11, 12), est associée, en tant que dispositif d'affichage (13), une pluralité de diodes lumineuses (18), regroupées en une barrette lumineuse LED (19).

15. Dispositif selon la revendication 14, **caractérisé en ce que**, aux différents éléments LED (18) de la barrette lumineuse (19), sont associés des espacements différents respectivement des plages d'espacement différents entre l'initiateur (8) respectif et la courroie de transport (3).

16. Dispositif selon la revendication 15, **caractérisé en ce qu'**un élément LED (18_{g}) intérieur, respectivement central, de la barrette lumineuse (18), lors de son activation, affiche une allure centrée, conforme de la courroie de transport (3) ; **en ce que** le, respectivement les éléments LED voisin(s) (18_{y}, 18ᵣ) est (sont) associé(s) à un état de déploiement prédéterminé latéral et, pour délivrer un signal d'avertissement préalable optique par rapport aux éléments LED (18_{g}) les plus intérieurs, sont, de préférence, munis d'une autre coloration, le cas échéant allant en augmentant de l'intérieur vers l'extérieur, en termes d'intensité de couleur et/ou d'éclairement ; **en ce que**, en aval du dernier élément LED de pré-avertissement, est disposé au moins un élément pour la fourniture optique d'un signal d'alarme, dont la coloration et/ou l'intensité de coloration et/ou l'intensité d'éclairement est, de préférence, plus intense par rapport aux éléments (18) précédents ; et **en ce qu'**en aval du ou des éléments émetteurs d'alarme est disposé un élément pour la fourniture optique d'un signal affichant la mise hors service de l'installation, dont la coloration ou l'intensité de coloration est particulièrement frappante.

17. Dispositif selon l'une ou plusieurs des revendications 3 à 16, **caractérisé en ce que** le matériau d'incorporation pour la plaque de mesure de capteur (19) d'un initiateur (S) est formé d'une matière synthétique, telle que, par exemple, du polycarbonate.
